# EUROPÄISCHE PATENTANMELDUNG

(11) **EP 2 361 895 A1**
(43) Veröffentlichungstag der Anmeldung: **31.08.2011**
(21) Anmeldenummer: 11001101.2
(22) Anmeldetag: 10.02.2011
(51) Int. Cl.: C04B 28/22

(54) **Zusammensetzung eines Formkörpers zur Verwendung als Dämmplatte, Verfahren zu seiner Herstellung sowie Dämmplatte**

(30) Priorität: 25.02.2010 DE 102010009373
(71) Anmelder: SRZ Schutzrechte Verwaltungs-GmbH, 90571 Schwaig (DE)
(72) Erfinder: Wolfram, Stefan, 91275 Auerbach (DE); Schrödel, Wolfgang, 90592 Schwarzenbruck (DE); Schmid Hermann A., 90409 Nürnberg (DE)
(74) Vertreter: Tergau, Dietrich

(57) **Zusammenfassung**

Die Erfindung betrifft einen hinsichtlich seiner Funktionalität verbesserten Formkörper, dessen Zusammensetzung und ein Verfahren zu dessen Herstellung. Die Zusammensetzung umfasst hierzu eine Anzahl Rohstoffe sowie einen Sekundärrohstoff und bietet somit eine kostengünstige und ressourcenschonende Lösung zur Herstellung eines wärmedämmenden und feuchtebeständigen Materials.

## Beschreibung

Die Erfindung betrifft eine Zusammensetzung eines mineralischen Formkörpers, insbesondere zur Verwendung als Sanier- und Dämmplatte mit einer Anzahl hierfür erforderlicher Rohstoffe. Weiterhin betrifft die Erfindung ein Verfahren zur Herstellung eines Formkörpers mit einer derartigen Zusammensetzung ebenso wie eine Sanier- und Dämmplatte.

Bei der Verwendung als Sanierplatte eignet sich die erfindungsmäßige Platte insbesondere zur Sanierung von feuchten Wänden, also zur Sanierung von Salzschäden, Schimmelschäden und Pilzbefallschäden.

In der Bauindustrie werden bei Baumaterialien insbesondere im Hinblick auf die Energieeffizienz, also für die bessere Ausnutzung vorhandener Energie, zunehmend höhere Ansprüche gestellt. Eine wesentliche Voraussetzung hierfür ist eine gute Wärmedämmung. Durch die Verwendung des richtigen Dämmmaterials können, beispielsweise bei der Dämmung eines Wohnraums, Heizkosten reduziert werden. Zugleich haben offenporige Dämmstoffe auch schallabsorbierende Eigenschaften. Positive Einflussgrößen für die Schallabsorption sind hierbei eine geringe Rohdichte, eine feinporige Struktur, eine sehr hohe offene Porosität und eine sehr hohe innere Oberfläche.

Schallschutz bedeutet einerseits Schalldämmung. Hierbei soll verhindert werden, dass der Schall von einem Raum in einen anderen Raum gelangt. Andererseits bedeutet Schallschutz, dass ein bestimmtes Schallaufkommen in einem Raum gedämpft oder absorbiert wird. Zur Dämmung benötigt man Massen, also schwere und dichte Baustoffe. Zur Dämpfung hingegen benötigt man offenporige Strukturen mit großer innerer Oberfläche, an welcher die Schallenergie durch Reibung in Wärmeenergie umgewandelt wird.

Durch die Verbesserung der Wärmedämmung von Fenstern, Wänden, Dächern oder Kellerdecken kann, vom heutigen Standard aus, etwa die Hälfte der ohne Dämmung benötigten Heizenergie eingespart werden. Die Dämmeigenschaft einer Wand wird nicht nur durch die Wärmeleitung des Wandmaterials bestimmt, sondern auch durch den Wärmeübergang von der Zimmerluft auf die Wand bzw. von der Wand an die Außenluft. Wie viel Wärmeenergie durch eine Wand oder ein Fenster nach außen dringt, wird durch das Wand- bzw. Fenstermaterial und ihre Dicke bestimmt. Häufig werden zur Einhaltung geforderter Werte Dämmmaterialien wie beispielsweise Schilfrohrmatten, Kalzium-Silikat-Platten, Holzwolle, Kork, Bimsstein, Perlite, geschäumte Kunststoffe oder Schaumglas eingesetzt.

Die Rohstoffe hierfür müssen jedoch extra hergestellt werden und produzieren so hohe Kosten. Der expandierende Markt verlangt dementsprechend zunehmend nach kostengünstigen Lösungen, die wärmedämmende und feuchtebeständige Eigenschaften haben und gleichzeitig ressourcenschonend sind. Hierbei werden Sekundärrohstoffe bevorzugt.

Aufgabe der Erfindung ist es, eine hinsichtlich ihrer Dämmeigenschaften verbesserte Dämmplatte, deren Zusammensetzung und ein Verfahren zu deren Herstellung anzugeben.

Diese Aufgabe wird durch die Merkmalskombination der Ansprüche 1, 11, 13 und 15 gelöst. Die abhängigen Ansprüche beinhalten teilweise vorteilhafte und teilweise für sich selbst erfinderische Weiterbildungen der Erfindung.

Neu ist die Kombination als Dämm-, Salz-, oder Schimmelsanierplatte an feuchten Wänden, wobei die Schimmel- und Pilzbildung durch einen hohen pH-Wert von ca. 10 deutlich gemindert oder ganz verhindert wird. Die hohe offene Porosität wirkt zusätzlich schallabsorbierend.

Demnach umfasst die Zusammensetzung eines Formkörpers zur Verwendung als eine Sanier- und Dämmplatte die Bestandteile Quarzsand, Kalk, Zement, Wasser, Schaumbildner, einen Rest unvermeidbarer Verunreinigungen sowie einen Sekundärrohstoff als Zuschlagstoff.

Üblicherweise werden die Rohstoffe, die in einer Zusammensetzung zur Herstellung eines Formkörpers dienen, den Anforderungen und Kundenwünschen entsprechend angepasst, hergestellt und geliefert. Insbesondere können die Rohstoffe nicht naturbelassen verwendet werden, sondern müssen zur Herstellung der Formkörper bzw. Dämmmaterialien in ihrer Konsistenz gesondert angepasst werden. Weiterhin muss zur Erreichung der vorgeschriebenen Werte für die Wärmedämmung, beispielsweise im Rahmen der Energiesparverordnung bei großen Schichtdichten bis 400 mm, viel Material verwendet werden. Dies erhöht insgesamt die Herstellungsdauer und den Herstellungsaufwand, was hohe Produktionskosten nach sich zieht.

Die Erfindung berücksichtigt hierbei insbesondere, dass als Material für eine Dämmplatte die primären Rohstoffe und der Sekundärrohstoff leicht zugänglich sein sollten, ohne dass sie noch einer gesonderten Vorbehandlung unterzogen werden müssen. Die Verwendung eines bereits vorhandenen und unverändert weiter verarbeitbaren Rohstoffes bzw. Sekundärrohstoffs stellt eine erfinderische Alternative zu den bislang verwendeten Rohstoffen dar.

Für die Herstellung der Zusammensetzung eignet sich Säge-, Schneid- und Schleifschlamm aus der Glas- und Steinbearbeitung als Sekundärrohstoff deshalb besonders gut. Schleifschlamm entsteht in der Industrie, beispielsweise bei der Bearbeitung von Glaskörpern, wie Autoscheiben. Normalerweise muss dieser Schlamm nach der Verwendung kostenintensiv und aufwändig entsorgt werden. Dies entfällt durch die Weiterbenutzung des Schleifschlamms, wodurch ein bislang schwierig zu entsorgendes Recyclingprodukt sinnvoll weiterverwendet werden kann.

Der Schleifschlamm erfüllt weiterhin alle nötigen Voraussetzungen eines Ersatzstoffs. Er ist wegen seiner Feinheit sehr reaktiv. Schleifschlamm kann als Ersatzstoff für Quarzsand oder Quarzmehl verwendet werden und dem Formkörper mehr Stabilität verleihen.

Der Schleifschlamm kann zusätzlich zum Quarzsand verwendet werden oder diesen vollständig ersetzen. Hierdurch können die vorhandenen Ressourcen noch besser genutzt werden, da die Bereitstellung von Quarzsand oder Quarzmehl für die Herstellung eines Formkörpers nicht länger notwendig ist.

Zement ist ein Bindemittel, das den hohen Anforderungen im Baubereich entspricht. Zement ist hauptsächlich kieselsaures Calcium mit Anteilen an Aluminium und Eisen. Zement ist ein hydraulisches Bindemittel, das sowohl an der Luft als auch unter Wasser erhärtet und beständig ist. Zement reagiert mit Wasser unter Bildung unlöslicher, stabiler Calciumsilikathydrate. Diese bilden feine nadelförmige Kristalle aus, welche sich untereinander verzahnen und so zu hoher Festigkeit führen.

In einer vorteilhaften Ausgestaltung der Erfindung umfasst die Zusammensetzung 5 - 65 Massen-% Quarzsand, 2 - 20 Massen-% Kalk, 0 - 50 Massen-% Zement, 2 - 70 Massen-% Wasser, 0 - 5 Massen-% Schaumbildner, 5 - 65 Massen-% Schleifschlamm sowie einen Rest unvermeidbarer Verunreinigungen. Eine Zusammensetzung innerhalb dieser Grenzen bietet die Möglichkeit, einen Formkörper herzustellen, der die an ihn gestellten Anforderungen im Hinblick auf seine Dämmeigenschaften und unter Berücksichtigung der Wirtschaftlichkeit erfüllt. Der Formkörper kann beispielsweise eine Dichte zwischen 0,1 und 2 kg/dm³ und vorzugsweise zwischen 0,1 und 0,4 kg/dm³ aufweisen.

Vorteilhafterweise ist der Sekundärrohstoff Schleifschlamm oder mineralischer Sägeschlamm oder Schneidschlamm. Es bietet sich somit die Möglichkeit, Rohstoffe zum Beispiel aus der Glasbearbeitung oder auch aus dem Zuschnitt von Steinen zu gewinnen. Dementsprechend können bislang nicht mehr verwendete Rohstoffe weiterverarbeitet werden.

Bevorzugt enthält der Schleifschlamm keramische Partikel in einer Größenordnung zwischen 0,1 und 100 µm. Diese Partikelgrößen bieten die Möglichkeit, einen Formkörper mit den gewünschten Eigenschaften im Hinblick auf die Schalldämmung und die Wärmedämmung zu erhalten.

Vorteilhafterweise ist der Schaumbildner auf Proteinbasis hergestellt. Tenside stabilisieren den Schaum. Hierdurch lässt sich ein feinporiger, über die Reifezeit ein stabiler Schaum erzeugen. Der mit dem Schaumbildner hergestellte Schaum führt zu einer homogenen Verteilung stabiler, feiner Luftporen in der Baustoffmatrix. Das Porenvolumen und die Porenstruktur von mit dem Schaumbildner hergestellten Formkörpern bleiben konstant.

Zweckmäßigerweise liegt die Dichte der Zusammensetzung zwischen 0,1 kg/dm³ und 0,5 kg/dm³, vorzugsweise zwischen 0,2 und 0,3 kg/dm³. Durch eine Dichte in diesem Bereich kann insbesondere eine ausreichende Festigkeit gewährleistet werden. Zusätzlich ist der Schaum porös genug, um die Aufnahme von Feuchtigkeit zu gewährleisten. Die parallel erzielbare Wärmedämmung einer 20 - 50 mm dicken Platte verbessert den U-Wert, also den Wärmedurchgangskoeffizient der Wand merklich. Der Wärmedurchgangskoeffizient ist ein spezifischer Kennwert eines Bauteils und ist ein Maß für den Wärmestromdurchgang durch eine Materialschicht, wenn auf beiden Seiten verschiedene Temperaturen anliegen. Er wird im Wesentlichen durch die Wärmeleitfähigkeit und Dicke der verwendeten Materialien bestimmt, aber auch durch die Wärmestrahlung und Konvektion an den Oberflächen.

In einer besonders vorteilhaften Ausgestaltung der Erfindung liegt das Litergewicht der Zusammensetzung in einem Bereich zwischen 0,2 und 1,5 kg/dm³, vorzugsweise zwischen 0,4 und 0,8 kg/dm³. Das Litergewicht ist proportional zur Dichte und damit proportional zum Gewicht des Formkörpers. Die Produktionskontrolle zur Einhaltung der gewünschten Trockendichte erfolgt über die Kontrolle des Litergewichts der Suspension.

Insgesamt sind eine Vielzahl weiterer Zuschlagstoffe denkbar, die entweder zusätzlich oder alternativ zu den angegebenen Zuschlagstoffen eingesetzt werden können.

Vorteilhafterweise umfasst die Zusammensetzung als weiteren Zuschlagstoff 0-65 Massen-% Flugasche. Flugasche dient als teilweiser oder vollständiger Ersatz für Zement. Als Flugasche bezeichnet man allgemein den festen, dispersen Rückstand von Verbrennungen. Flugasche entsteht in großen Mengen in Wärmekraftwerken und Müllverbrennungsanlagen in der Roheisen- und Stahlerzeugung und muss dort durch Filter aus den Rauchgasen abgeschieden werden. Die Teilchengröße reicht von etwa 1 µm bis 1 mm. An Teilchenformen treten sowohl glatte, massive Kugeln als auch Hohlkugeln, Plättchen, Fasern und Agglomerate auf. Die Zusammensetzung der Flugasche hängt stark vom Brennmaterial ab. Aufgrund ihrer chemischen und physikalischen Eigenschaften, wie der puzzolanischen Reaktivität, der kugeligen Kornform und der Kornverteilung, ist insbesondere die Steinkohlenflugasche ein hochwertiger Sekundärrohstoff, der im Bauwesen eine Vielzahl von Anwendungsmöglichkeiten findet.

Bevorzugt sind 0-65 Massen-% alkalisch aktivierte Tone oder Metatone als teilweise oder vollständiger Zementersatz umfasst. Beispielsweise sind ein Lehm, Metakaolin, Anhydrit oder Metalloxide denkbar. Tone oder Lehm erhöhen einerseits die Wasseraufnahme und verbessern somit das Sorptionsverhalten, andererseits erhöhen alkalisch aktivierte Metatone die Grundfestigkeit (hydraulisches Abbinden).

In einer weiter vorteilhaften Ausgestaltung der Erfindung umfasst die Zusammensetzung Gips, Aluminiumoxid und Eisenoxid als weitere Zuschlagsstoffe, wobei insbesondere 0,5 - 5 Massen-% Gips, 0,5 -50 Massen-% Aluminiumoxid und 05-10 Massen-% Eisenoxid umfasst sind. Diese drei Zusatzstoffe bewirken eine Festigkeitserhöhung von bis zu 20%. Gips, Aluminiumoxid und Eisenoxid führen zur Bildung von Eisenaluminiumhydrogranaten, welche im Autoklaven als Mischkristalle entstehen und je nach Mischungsverhältnis im Gesamtversatz ein Festigkeitsmaximum ausbilden. Diese Mischkristalle, wie beispielsweise Calziumaluminatferrate oder Hydrogranate, bewirken eine Erhöhung der offenen Porosität mit einem großen Anteil an Mikroporosität und erlauben zum Beispiel den Einsatz als akustische Schallabsorptionsplatte.

Bevorzugt umfasst die Zusammensetzung ein Massenhydrophobierungsmittel, vorzugsweise 0,2 - 2 Massen-%. Hydrophobierungsmittel dienen beispielsweise als wasserabweisende Imprägnierung eines kapillarporigen Untergrundes, wie zum Beispiel eines Mauerwerks, Mörtel und Zementputz. Hydrophobierte Flächen lassen Regenwasser abperlen, behindern aber eine Diffusion von Wasserdampf kaum.

Eine weitere Zusammensetzung eines mineralischen Formkörpers umfasst Quarzsand, Schleifschlamm, Kalk und Wasser sowie einen Rest unvermeidbarer Verunreinigungen. Hierbei sind bevorzugt 60 - 90 Massen-% Quarzsand, 5 - 30 Massen-% Schleifschlamm, 2-20 Massen-% Kalk und 2-10 Massen-% Wasser vorgesehen. Diese Zusammensetzung eignet sich besonders für Mauerwerk und kann sowohl im Innen- als auch in Außenbereich verwendet werden.

Vorteilhafterweise hat ein mineralischer Formkörper mit der vorgenannten Zusammensetzung eine Trockendichte zwischen 1,5 und 2,5 kg/dm³, vorzugsweise zwischen 2,0-2,5 kg/dm³.

Grundsätzlich ist es selbstverständlich auch möglich, die Zusammensetzung der Formkörper im Hinblick auf die gewünschten Dämm- und Absorptionseigenschaften durch die Zugabe weiterer Zusatzstoffe zu ergänzen. Die genannten Zusammensetzungen bieten weiterhin die Möglichkeit, Formkörper bzw. Dämmplatten herzustellen, die innere Hohlräume oder Kapillare aufweisen. Als Kapillare werden beispielsweise Hohlräume verstanden, die sich in langgestreckter Form innerhalb eines Körpers ausbilden. Diese inneren Hohlräume oder Kapillare stellen ein inneres Porenvolumen zur Verfügung, in welchem Feuchtigkeit aufgenommen und Schall absorbiert werden kann. Die Anzahl, die Form und die Größe der Poren bzw. der Kapillare werden durch die Partikel bestimmt, die Teil der Zusammensetzung sind. Hierbei sind beispielsweise Partikelgrößen und Korngrößenverteilung innerhalb der Dämmplatte zu berücksichtigen.

Die Dämmplatte ist insbesondere atmungsaktiv und faserfrei und kann besonders gut zur Innendämmung von Wänden verwendet werden. Die Dämmplatte ist frei von Kunststoffzusätzen und flüchtigen organischen Verbindungen. Sie wirkt feuchteregulierend, vermeidet Kondenswasserbildung und schafft dadurch ein angenehmes Raumklima. Eine durch Wasseraufnahme bedingt feuchte Platte hat insbesondere einen pH-Wert, welcher im basischen Bereich liegt. So kann trotz Feuchtigkeitsspeicherung die Bildung von Schimmel und Pilzen gemindert oder gänzlich verhindert werden. Der pH-Wert kann hierbei in Abhängigkeit der Zusammensetzung variieren.

Aufgrund der hohen offenen Porosität hat die Dämmplatte eine relativ trockene Oberfläche, so dass ausblühende Salze vorwiegend in der Platte rekristallisieren. Auf diese Weise kann eine Putzhaftung für 5 bis 25 Jahre gewährleistet werden.

Beispielhaft sind an dieser Stelle tabellarisch eine Zusammensetzung und die physikalisch-chemischen Eigenschaften einer Dämmplatte mit dieser Zusammensetzung gezeigt.

**Tabelle 1**

| Zusammensetzung einer Dämmplatte mit Schleifschlamm und Metakaolin | |
|---|---|
| Kalk | 7,50% |
| Schleifschlamm | 13,50% |
| Flugasche | 25,00% |
| Ton/Lehm/Kaolin | 2,00% |
| Metaton/Metakaolin | 2,00% |
| Wasser | 49,29% |
| Schaumbildner | 0,71% |

**Tabelle 2**

| Physikalisch-chemische Eigenschaften der Zusammensetzung gemäß Tabelle 1 | |
|---|---|
| | **Ø-Werte** |
| Wärmeleitfähigkeit | 0,065 W/m*K |
| Wärmekapazität c | 1300 J/kg*K |
| Sorptionsfeuchte | 5,7 % |
| Wasserdampfdiffusionswiderstandszahl µ | 4 |
| Wasseraufnahme | 5,0 kg/m²*h^{0.5} |
| Kapillarer Wassergehalt | 0,280 |
| Porosität | 0,85 m³/m³ |
| Rohdichte | 300 kg/m³ |
| Druckfestigkeit | 2,1 N/mm2 |
| Biegefestigkeit | 0,85 N/mm2 |
| Schallabsorptionsgrad α0 | |
| 400 Hz: | > 30% |
| 600 bis 900 Hz: | > 60% |
| 900 bis 1000 Hz: | > 80% |
| > 1000 Hz: | > 90% |

Grundsätzlich sind selbstverständlich auch andere Zusammensetzungen möglich, wobei sich dann gleichermaßen die Eigenschaften der Zusammensetzung bzw. der Sanier- und Dämmplatte ändern.

Das Verfahren zur Herstellung eines Formkörpers mit einer vorgenannten Zusammensetzung umfasst die folgenden Verfahrensschritte: chargenweises Abwiegen der Rohstoffe, Lösen einer Anzahl von Rohstoffen zur Herstellung einer Suspension mit einem Mischer, Befüllen eines Rührbehälters mit der Suspension, Zugabe des Schaumbildners, Homogenisieren der Suspension zur Herstellung eines Schaums, Einfüllen des Schaums in einen Formkasten zur Ausbildung des Formkörpers, Aushärten des Formkörpers, Zuschnitt des Formkörpers mittels einer Drahtharfe und Aushärten der Dämmplatten in einem Autoklaven.

Das Verfahren ermöglicht die Fertigung von Formkörpern bzw. insbesondere Sanier-/Dämmplatten, mit einer besonders guten Durchmischung. Hierdurch können gleichmäßige Dämmeigenschaften an jeder oder zumindest fast jeder Stelle gewährleistet werden. Durch die Homogenisierung der Ausgangsrohstoffe, also dem gleichmäßigen Vermischen der nicht ineinander löslichen Substanzen, kann eine gleichmäßige Verteilung erreicht werden.

In einer vorteilhaften Ausgestaltung der Erfindung ist zur Homogenisierung eine Kugelmühle vorgesehen. Eine Kugelmühle ist eine Mahlkörpermühle zur Grob-, Fein- und Feinstzerkleinerung oder Homogenisierung. Sie besteht aus einem in Rotation versetzten Mahlraum, in dem Mahlgut durch Mahlkörper zerkleinert wird. Das allgemeine Prinzip einer Kugelmühle liegt in der Bewegung von Mahlkörper und Mahlgut. Dadurch kommt es zu Scherbewegungsstößen zwischen den Mahlkörpern untereinander und zwischen Mahlkörpern und Wänden. Das Mahlgut wird zerkleinert, wenn es sich zwischen den Körpern befindet. Die Zerkleinerung des Materials geschieht durch Reib- und Stoßbeanspruchung. Der Energieeintrag geschieht durch das Drehen im Schwerefeld der Erde. Als Mahlkörper kommen häufig Kugeln oder Zylinder zum Einsatz. Abhängig von der Drehzahl treten verschiedene Mahlkörperbewegungsformen auf. Bei niedrigen Drehzahlen findet Kaskadenbewegung statt, bei der die Kugeln nur abrollen. Mit steigender Drehzahl werden die Kugeln angehoben und fallen auf das Mahlgut. Oberhalb der kritischen Drehzahl werden die Kugeln von der Fliehkraft an der Trommelwand festgehalten und es findet kaum noch Bewegung und Vermahlung statt. Der optimale Betriebspunkt ist oberhalb einsetzender Kataraktbewegung und unterhalb der kritischen Drehzahl.

Bevorzugt ist die Kugelmühle als Rührwerkskugelmühle, vorzugsweise als Hydrozyklon ausgebildet. Die Rührwerkskugelmühle ist eine Sonderform der Kugelmühle. Dieser Mühlentyp kommt in den Bereichen zum Einsatz wo bestimmte Feinheiten in großen Mengen wirtschaftlich erzeugt werden müssen. Eine Rührwerkskugelmühle ist eine Kugelmühle mit einem Rührwerk, das durch Zugabe von Mahlperlen sehr feine Korngrößen erzielt. Sie kann in verschiedenen Ausführungen vorliegen. Man unterscheidet beispielsweise die zwischen der waagerechten und der horizontalen Rührwerkskugelmühle. Bei der waagerechten Ausführung wird ein liegender zylindrischer Mahlbehälter der mit Mahlperlen und Mahlgut gefüllt ist, wohingegen bei horizontaler Ausgestaltung ein stehender zylindrischer Mahlbehälter verwendet wird. Im Behälter befindet sich das Rührwerk, das die Schüttung in Rotation versetzt. Je nach Mahlgut kann die Mühle verschleißgeschützt ausgeführt werden. Insbesondere finden Rührwerkskugelmühlen Verwendung, die konzentrische um eine Welle angeordnete und sich drehende Rührscheiben aufweisen.

Insgesamt bietet die Verwendung einer Rührwerkskugelmühle die Möglichkeit, die Ausgangsrohstoffe fein zu mahlen und gleichmäßig zu verteilen. Hierbei entsteht ein Schaum, der aufgrund dessen an nahezu jeder Stelle die gleiche Zusammensetzung und damit auch die gleichen Eigenschaften aufweist.

Ein Autoklav, der sich nach dem Schneiden des Formkörpers zur Aushärtung der einzelnen Platten anbietet, ist ein gasdicht verschließbarer Druckbehälter, der für die thermische Behandlung von Stoffen im Überdruckbereich eingesetzt wird. Der Autoklav dient insbesondere zum Aushärten von Baustoffen. Die thermische Behandlung der Stoffe erfolgt unter Abschluss gegenüber der umgebenden Atmosphäre chargenweise. Dazu sind die Druckbehälter meistens mit Schnellverschlüssen ausgerüstet, die gegenüber geflanschten Druckbehälteröffnungen ein wesentlich schnelleres Öffnen und Schließen des Druckbehälters ermöglichen.

Grundsätzlich können die Sanier-/Dämmplatten an diesem Punkt noch weiterverarbeitet werden.

Insgesamt ist das Herstellungsverfahren nicht allein auf die genannten Schritte beschränkt und kann an die gestellten Anforderungen angepasst werden. Diese beziehen sich insbesondere auf die Verwendung der Mischer, Rührbehälter und Formkästen, die je nach Einsatzgebiet in unterschiedlichen Größen und Ausgestaltungen in den Herstellungsprozess einbezogen werden können.

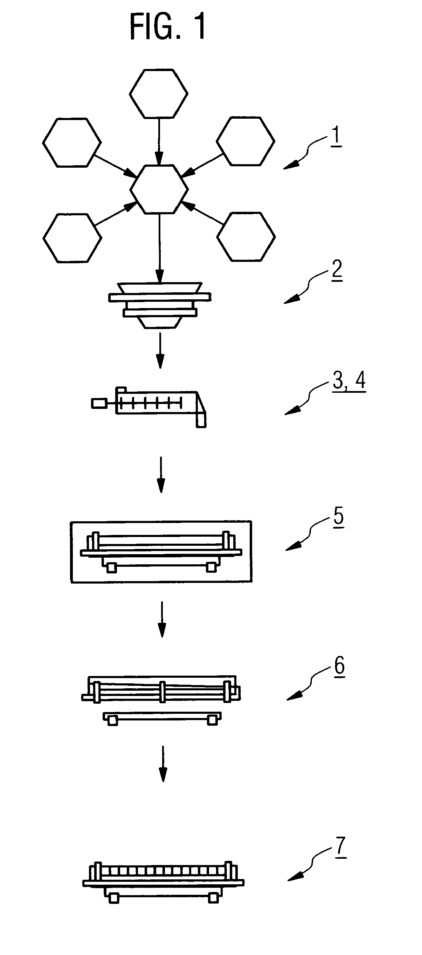

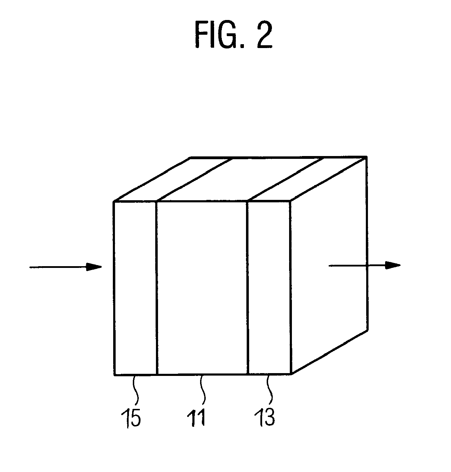

Das Verfahren zur Herstellung einer Dämmplatte mit einer vorgenannten Zusammensetzung wird nachfolgend anhand von **Fig. 1** näher erläutert, in **Fig. 2** ist exemplarisch eine Wand mit einer Dämmplatte gezeigt.

Zu Beginn der Herstellung werden die Rohstoffe - Quarzsand, Kalk, Zement, Schaumbildner und Schleifschlamm - chargenweise abgewogen, dosiert und zusammen mit Wasser in einem Zwangsmischer gemischt (Schritt 1 und 2). Zur Herstellung einer Suspension wird diese Mischung in einem nächsten Schritt in einen Dosier- und Rührbehälter gefüllt. An dieser Stelle wird der Suspension ein Proteinschaumbildner zugefügt, um einen Schaum zu bilden (Schritt 3).

Der entstehende Schaum muss besonders gründlich weiterverarbeitet werden, um eine gute Durchmischung und gleichmäßige Verteilung der eingesetzten Rohstoffe zu gewährleisten. Der Scheidungsprozess läuft ab diesem Zeitpunkt kontinuierlich. Die Suspension wird zur Herstellung des Schaums homogenisiert. Zur Einstellung der Schaumdichte bzw. des Litergewichtes wird der Suspension während des Homogenisierens kontinuierlich Druckluft zugeführt. Hierzu wird eine Rührwerkskugelmühle verwendet und die Suspension wird kontinuierlich durch den Mahlraum hindurch gepumpt (Schritt 4). Die Vermischung und Zerkleinerung der Agglomerate den einzelnen Komponenten geschieht hier durch Rührscheiben, die auf einer Welle angeordnet sind und sich drehen. Die Zusammensetzung bzw. die einzelnen Komponenten werden vermengt, zerkleinert und gleichmäßig verteilt und schließlich zentrisch über die Welle durch ein Ringspaltsieb aus der Rührwerkskugelmühle ausgetragen. Die Rührwerkskugelmühle wirkt dementsprechend wie ein Hydrozyklon.

Der Schaum wird kontinuierlich in Formkästen eingefüllt, die zur Ausbildung der Formkörper dienen und dort aushärten (Schritt 5). Der gehärtete Formkörper wird mittels einer Drahtharfe geschnitten (Schritt 6). Die dabei entstehenden Sanier- und Dämmplatten werden in einem Autoklaven ausgehärtet (Schritt 7).

Anschließend können die Sanier- und Dämmplatten zur Wärmedämmung und zur Speicherung von Feuchtigkeit verwendet werden.

Fig. 2 zeigt exemplarisch eine Kellerwand 11 mit einer Dicke von 240 mm und einer Drainagesteinschicht 13, also einem Hohlblock-Leichtbeton, mit einer Dicke von 100 mm. Die Kellerwand 11 hat einen u-Wert, also einen Wärmedurchgangskoeffizienten bzw. eine Wärmedurchlässigkeit von 1,72 W/m²K. Eine Sanier-/Dämmplatte 15 auf der Innenwand, vorliegend HSP Mineralschaum mit einer Dicke von 50 mm, verbessert den u-Wert um bis zu 1 W/m²K.

Die Produktionskontrolle zur Einhaltung der gewünschten Trockendichte erfolgt über die Kontrolle des Litergewichts der Suspension. Für eine Trockendichte von 0,25 kg/dm³ ist das Litergewicht der Suspension bei einem Anmachwassergehalt von 30 % = 0,36 kg/dm³, bei einem Anmachwassergehalt von 50 % = 0,5 kg/dm³.

### Bezugszeichenliste

- 1: Abwiegen
- 2: Mischen
- 3: Schäumen
- 4: Homogenisieren
- 5: Reifen im Formkasten
- 6: Schneiden
- 7: Härten im Autoklaven
- 11: Kellerwand
- 13: Drainagesteinschicht
- 15: Sanier-/Dämmplatte

## Patentansprüche

1. Zusammensetzung eines mineralischen Formkörpers, umfassend die folgenden Rohstoffe:
- Quarzsand
- Kalk,
- Zement oder Zementersatz,
- Wasser,
- Schaumbildner und
- einem Sekundärrohstoff als Zuschlagstoff,
sowie einen Rest unvermeidbarer Verunreinigungen.

2. Zusammensetzung nach Anspruch 1, umfassend
- 5 - 65 Massen-% Quarzsand,
- 2 - 20 Massen-% Kalk,
- 0 - 50 Massen-% Zement oder Zementersatz,
- 2 - 70 Massen-% Wasser;
- 0 - 5 Massen-% Schaumbildner und
- 5 - 65 Massen-% Sekundärrohstoff,
sowie einen Rest unvermeidbarer Verunreinigungen.

3. Zusammensetzung nach Anspruch 1 oder 2,
**dadurch gekennzeichnet,**
**dass** der Sekundärrohstoff Schleifschlamm oder mineralischer Sägeschlamm oder Schneidschlamm ist und/oder keramische Partikel zwischen 0,1 und 100 µm enthält.

4. Zusammensetzung nach einem der Ansprüche 1 bis 3,
**gekennzeichnet durch**
einen Schaumbildner auf Proteinbasis.

5. Zusammensetzung nach einem der Ansprüche 1 bis 4,
**gekennzeichnet durch**
eine Trockendichte zwischen 0,1 und 0,5 kg/dm³, vorzugsweise zwischen 0,2 und 0,3 kg/dm³.

6. Zusammensetzung nach einem der Ansprüche 1 bis 5,
**gekennzeichnet durch**
ein Litergewicht zwischen 0,2 und 1,5 kg/dm³, vorzugsweise zwischen 0,4 und 0,8 kg/dm³.

7. Zusammensetzung nach einem der Ansprüche 1 bis 6,
**gekennzeichnet durch** 0 - 65 Massen-% Flugasche als teilweisen oder vollständigen Zementersatz.

8. Zusammensetzung nach einem der Ansprüche 1 bis 7,
**gekennzeichnet durch** 0 - 65 Massen-% alkalisch aktivierte Tone oder Metatone als teilweisen oder vollständigen Zementersatz.

9. Zusammensetzung nach einem der Ansprüche 1 bis 8,
**gekennzeichnet durch**
die Zugabe von Gips und eines Aluminiumoxids und eines Eisenoxids, vorzugsweise
- 0,5 - 5 Massen-% Gips,
- 0,5 - 50 Massen-% Aluminiumoxid und
- 0,5-10 Massen-% Eisenoxid.

10. Zusammensetzung nach einem der Ansprüche 1 bis 9,
mit einem Massenhydrophobierungsmittel, vorzugsweise in einem Konzentrationsbereich zwischen 0,2 und 2 Massen-%.

11. Zusammensetzung eines mineralischen Formkörpers, umfassend die folgenden Rohstoffe:
- Quarzsand, insbesondere 60 ― 90 Massen-% Quarzsand,
- Schleifschlamm, insbesondere 5 ― 30 Massen-% Schleifschlamm,
- Kalk, insbesondere 2 ― 20 Massen-% Kalk, und
- Wasser, insbesondere 2 ― 10 Massen-% Wasser.

12. Zusammensetzung nach Anspruch 11,
**gekennzeichnet durch**
eine Trockendichte zwischen 1,5 und 2,5 kg/dm³, vorzugsweise zwischen 2,0 - 2,5 kg/dm³.

13. Verfahren zur Herstellung eines Formkörpers mit einer Zusammensetzung nach einem der Ansprüche 1 bis 10 und/oder nach einem der Ansprüche 11 oder 12, umfassend die folgenden Verfahrensschritte:
- chargenweises Abwiegen der Rohstoffe,
- Lösen einer Anzahl von Rohstoffen zur Herstellung einer Suspension mit einem Mischers,
- Befüllen eines Rührbehälters mit der Suspension,
- Zugabe des Schaumbildners,
- Homogenisieren der Suspension zur Herstellung eines Schaums,
- Einfüllen des Schaums in einen Formkasten zur Ausbildung des Formkörpers,
- Aushärten des Formkörpers,
- Zuschnitt des Formkörpers mittels einer Drahtharfe, und
- Aushärten der Dämmplatten in einem Autoklaven.

14. Verfahren zur Herstellung eines Formkörpers nach Anspruch 13,
wobei zur Homogenisierung der Suspension eine Kugelmühle verwendet wird, welche vorzugsweise als Rührwerkkugelmühle, insbesondere als Hydrozyklon, ausgebildet ist.

15. Mit einem Verfahren nach Anspruch 13 oder 14 hergestellte Sanier- oder Dämmplatte (15) mit einer Zusammensetzung nach einem der Ansprüche 1 bis 10 oder nach einem der Ansprüche 11 bis 12.
